# EUROPEAN PATENT APPLICATION

(11) **EP 4 591 984 A1**
(43) Date of publication of application: **30.07.2025**
(21) Application number: 25152813.9
(22) Date of filing: 20.01.2025
(51) Int. Cl.: B02C 1/02, B02C 1/04, B02C 1/10, B02C 21/02

(54) **MATERIAL PROCESSING DEVICE WITH VARIABLE OPERATING MECHANISM**

(30) Priority: 26.01.2024 GB 202401088
(71) Applicant: Terex GB Limited, Dungannon County Tyrone BT71 4DR (GB)
(72) Inventor: DUNN, Gordon, Omagh BT78 5LZ (GB)
(74) Representative: FRKelly

(57) **Abstract**

A jaw crusher has an operating mechanism comprising a rotatable shaft coupled to a movable jaw in order to translate rotation of the shaft into oscillatory movement of the jaw. The shaft comprises a coupling portion by which the shaft is coupled to the movable part, wherein, in at least one configuration, a central axis of the coupling portion is parallel with the shaft axis and the coupling portion is eccentric with respect to the shaft axis. The coupling portion is configurable to adjust the location of the central axis with respect to the shaft axis in order to adjust the eccentricity of the coupling portion with respect to the shaft axis, thereby correspondingly adjusting the oscillatory movement imparted to the movable jaw.

## Description

### FIELD OF THE INVENTION

This invention relates to operating mechanisms for material processing devices. The invention relates particularly but not exclusively to operating mechanisms for crushers, especially jaw crushers.

### BACKGROUND TO THE INVENTION

Common types of operating mechanism used with material processing devices convert rotary motion into reciprocating and/or oscillatory motion of the apparatus. An example of such a device is a jaw crusher in which rotation of a flywheel is translated into reciprocating or oscillatory movement of a movable jaw relative to a fixed jaw. Other examples include other types of crusher, e.g. cone crushers and gyratory crushers, shredders, vibratory screens, vibratory conveyors, vibratory feeders and so on.

Such operating mechanisms can suffer from a number of problems including inflexibility and inefficiency. For example, in the case of jaw crushers conventional operating mechanisms cause the movable jaw to move with a fixed stroke, which limits the nature of the crushing that can be performed, are energy/fuel inefficient when the jaw crusher is being run up to or down from its normal operating speed, and may be unsuited to starting the crusher under load conditions, e.g. when jammed. In addition, because of the loads that the operating mechanism is required to handle, its components are required to be relatively powerful, which not only increases the power consumption of the system but also adds to its expense.

It would be desirable to mitigate at least some of the problems outlined above.

### SUMMARY OF THE INVENTION

A first aspect of the invention provides a material processing device comprising an operating mechanism for operating said material processing device, the operating mechanism comprising a shaft rotatable about a shaft axis, the shaft being coupled to a movable part of said material processing device in order to translate rotation of said shaft into oscillatory movement of said movable part, wherein the shaft comprises a coupling portion by which said shaft is coupled to said movable part, said coupling portion having a central axis, and wherein, in at least one configuration, said central axis is parallel with said shaft axis and said coupling portion is eccentric with respect to said shaft axis, and wherein said coupling portion is configurable to adjust the location of said central axis with respect to said shaft axis in order to adjust the eccentricity of said coupling portion with respect to said shaft axis.

Preferably, in said at least one configuration, in response to rotation of said shaft about said shaft axis, said coupling portion rotates eccentrically about said shaft axis, or rotates eccentrically with respect to the shaft axis.

Preferably, in at least one other configuration, said central axis is coincident or substantially coincident with said shaft axis. Preferably, in said at least one other configuration, in response to rotation of said shaft about said shaft axis, said coupling portion rotates concentrically, or substantially concentrically, with said shaft.

Typically, at least part of said coupling portion is rotatable about an offset axis that is parallel with, and preferably in a fixed location with respect to, said shaft axis, said at least part of said coupling portion, or at least an outer surface thereof, being eccentric with respect to said offset axis.

Typically, said coupling portion is coupled to said movable part by an outer surface of said coupling portion, said outer surface typically being centred on said central axis.

Typically, said coupling portion has an annular outer surface, said annular outer surface preferably being circular, or substantially circular, in transverse cross-section.

In some embodiments, said coupling portion comprises an annular structure, preferably in the form of a sleeve, rotatable about an offset axis that is parallel with, and preferably in a fixed location with respect to, said shaft axis, said annular structure, or at least an outer surface of said annular structure, being eccentric with respect to said offset axis, and wherein said annular structure is preferably an outer part of said coupling portion, and is preferably rotatable about said offset axis with respect to an inner part of said coupling portion. Said inner part of said coupling portion may comprise an offset shaft portion centred on said offset axis, said annular structure being located around said offset shaft portion and rotatable with respect to said offset shaft portion about said offset axis, said offset shaft portion preferably being part of said shaft. Said annular structure typically has an annular outer surface, said annular outer surface preferably being circular, or substantially circular, in transverse cross-section.

Said offset shaft portion may have an annular outer surface, said annular outer surface preferably being circular, or substantially circular, in transverse cross-section, and said annular structure has a corresponding annular inner surface, said annular inner surface preferably being circular, or substantially circular, in transverse cross-section, and wherein, preferably, said offset shaft portion and annular structure are correspondingly shaped and dimensioned preferably such that said inner surface of said annular structure and said outer surface of said offset shaft portion engage with each other, preferably having a close fit with each other, while allowing relative rotation between said annular structure and said offset shaft portion about said offset axis.

Said annular structure may have an annular outer surface, said annular outer surface preferably being circular, or substantially circular, in transverse cross-section, and an annular inner surface, said annular inner surface preferably being circular, or substantially circular, in transverse cross-section, wherein said inner surface is centred on said offset axis and said outer surface is centred on an axis parallel with said offset axis. Typically, said outer surface of said annular structure is centred on said central axis.

Said coupling portion may be coupled to said movable part by an outer surface of said annular structure.

In some embodiments, the configuration is such that rotation of said annular structure about said offset axis moves said central axis with respect to said shaft axis.

The entire coupling portion may be rotatable about said offset axis.

In some embodiments, said shaft includes an eccentric portion that is fixed with respect to said coupling portion, said eccentric portion, or at least an outer surface of said eccentric portion, being eccentric with respect to said coupling portion, and wherein said eccentric portion rotatably located within an annular structure, preferably in the form of a sleeve or collar, the annular structure, or at least an inner surface of the annular structure, being eccentric with respect to said coupling portion. Said eccentric portion, or at least an outer surface of said eccentric portion, may be centred on an offset axis that is parallel with, and preferably in a fixed location with respect to, said shaft axis, and wherein said annular structure, or at least an inner surface of said annular structure, is centred on said offset axis, said coupling portion and said eccentric portion being rotatable with respect to said annular structure about said offset axis. Said annular structure may have an annular outer surface, said annular outer surface preferably being circular, or substantially circular, in transverse cross-section.

Said eccentric portion may have an annular outer surface, said annular outer surface preferably being circular, or substantially circular, in transverse cross-section, and said annular structure has a corresponding annular inner surface, said annular inner surface preferably being circular, or substantially circular, in transverse cross-section, and wherein, preferably, said eccentric portion and said annular structure are correspondingly shaped and dimensioned, preferably such that said inner surface of said annular structure and said outer surface of said eccentric portion engage with each other, and preferably having a close fit with each other, while allowing relative rotation between said annular structure and said eccentric portion about said offset axis.

Said annular structure may have an annular outer surface, said annular outer surface preferably being circular, or substantially circular, in transverse cross-section, and an annular inner surface, said annular inner surface preferably being circular, or substantially circular, in transverse cross-section, wherein said inner surface is centred on said offset axis and said outer surface is centred on an axis parallel with said offset axis. Said outer surface of said annular structure may be centred on said shaft axis.

Said coupling portion may be coupled to said movable part by an outer surface of said coupling portion.

In some embodiments, the configuration is such that relative rotation of said annular structure and said eccentric portion moves said central axis with respect to said shaft axis.

In some embodiments, said eccentric portion is not part of said coupling portion, typically being displaced from said coupling portion in a direction along said shaft axis.

Typically, a flywheel is coupled to said shaft for rotation with said shaft about said shaft axis. Said annular structure, in particular an outer portion of said annular structure, may be fixed to said flywheel.

Preferably, in said at least one configuration said coupling portion is configured such that rotation of said shaft about said shaft axis causes said coupling portion to impart corresponding oscillatory movement to said movable part.

Preferably, in said at least one other configuration said coupling portion is configured such that rotation of said shaft about said shaft axis causes said coupling portion to impart no movement, or substantially no movement, to said movable part.

In some embodiments, said movable part includes a coupling structure, preferably in the form of a sleeve or other annular structure, the coupling structure being located around at least said coupling portion of said shaft and being coupled to the coupling portion to allow rotation of said coupling portion with respect to said coupling structure and to cause said coupling portion to impart oscillatory movement to said movable part upon rotation of said shaft about said shaft axis when in said at least one configuration. One or more bearing may be provided between the coupling portion and the coupling structure to facilitate rotation of said coupling portion within said coupling structure.

Typically, said operating mechanism includes, or is connectable to, driving means for directly or indirectly rotating said shaft.

In typical embodiments, said material processing device is a crusher, and said movable part is a crushing part of said crusher. Said crusher may be a jaw crusher and said movable part may be a movable jaw of said jaw crusher.

From another aspect, the invention provides a material processing apparatus comprising a material processing device of the first aspect of the invention mounted on a chassis, or other base.

From another aspect, the invention provides method of operating a material processing device as claimed in any one of claims 1 to 35, said method including operating said material processing device in at least one operating mode in which said coupling portion is configured such that rotation of said shaft about said shaft axis causes said coupling portion to impart corresponding oscillatory movement to said movable part, and adjusting said oscillatory movement, for example a stroke or magnitude of said oscillatory movement, by configuring said coupling portion to adjust the location of said central axis with respect to said shaft axis in order to adjust the eccentricity of said coupling portion with respect to said shaft axis. The method may include operating said material processing device in at least one other operating mode in which said coupling portion is configured such that rotation of said shaft about said shaft axis causes said coupling portion to impart no movement, or substantially no movement, to said movable part.

Said at least one other operating mode may include a start-up mode, the method including operating said material processing device in said start-up mode for an initial period, preferably until said operating mechanism reaches a desired operating speed, and subsequently operating said material processing device in said at least one operating mode.

Said at least one other operating mode may include a run-down mode, the method including operating said material processing device in said at least one operating mode, and subsequently operating said material processing device in said run-down mode for a run-down period, preferably until said operating mechanism is stopped.

The method may include operating said material processing device in a blockage clearance mode in which the configuration of the coupling portion is adjusted to increase the stroke or magnitude of the oscillatory movement, preferably in multiple increments. The method may include, during an initial period, configuring said coupling portion such that rotation of said shaft about said shaft axis causes said coupling portion to impart no movement, or substantially no movement, to said movable part, and subsequently adjusting the configuration of the coupling portion to increase the stroke or magnitude of the oscillatory movement.

Advantageously, preferred embodiments of the invention may be operated to progressively increase and or decrease the magnitude of the eccentric movement of the movable jaw of a jaw crusher, or other movable part of a material processing device, on the fly, i.e. during use.

Preferred embodiments exhibit any one or more of the following features/advantages:
- Being configurable to adjust the crushing action, other material processing action as applicable, to suit to the application and/or changes that occur during use.
- Being configurable to reduce power requirement by reducing the magnitude of movement of the jaw or other movable part depending on requirements, e.g. during start-up and/or run-down.
- Being able to start-up with a blocked crushing chamber, or other blocked component.
- Being configurable to reduce the load on clutch(es) and/or other components, e.g. during start-up and/or run-down.
- Being operable to reducing peak energy demand.
- Being operable to reduce fuel consumption.
- Reducing down time from blockages.
- Being operable with improved efficiency.

The above-identified features/advantages may be achieved by adjusting the extent or magnitude of the eccentric aspect of the operating mechanism. In particular, in preferred embodiments, the operating mechanism can be adjusted to adopt an operating mode in which there is a zero, or substantially zero, eccentric aspect to its movement, whereby the operating mechanism imparts no oscillatory movement, or substantially no oscillatory movement, to the movable jaw or other movable part. This mode reduces the load on the operating mechanism, which reduces power consumption and increases efficiency.

Further advantageous aspects of the invention will be apparent to those ordinarily skilled in the art upon review of the following description of specific embodiments and with reference to the accompanying drawings.

### BRIEF DESCRIPTION OF THE DRAWINGS

Embodiments of the invention will now be described by way of example and with reference to the accompanying drawings in which like numerals are used to indicate like parts and in which:
Figure 1 is an isometric view of a material processing apparatus including a jaw crusher and an operating mechanism for the jaw crusher;
Figure 2 is an isometric view of a jaw crusher embodying one aspect of the invention, including an operating mechanism embodying another aspect of the invention;
Figure 3 is a cross-sectional side view of the jaw crusher of Figure 2;
Figure 4 is an isometric cross-sectioned view of the jaw crusher of Figure 2;
Figure 5 is an exploded isometric view of the jaw crusher of Figure 2;
Figure 6 shows an isometric view of a shaft, being part of the operating mechanism, including a coupling portion that is shown separately from the shaft;
Figure 7 is an isometric sectioned view of the shaft of Figure 6, including the coupling portion, the shaft being in a configuration for non-eccentric rotation;
Figure 8 is an isometric sectioned view of the shaft of Figure 6, including the coupling portion, the shaft being in a configuration for eccentric rotation, in particular maximum eccentric rotation;
Figure 9A is an end view of the coupling portion;
Figure 9B is a side view of the coupling portion;
Figure 10A is an end view of the shaft shown without the coupling portion;
Figure 10B is a side view of the shaft shown without the coupling portion;
Figure 11 is a side view of the shaft, including the coupling portion, shown in a configuration for non-eccentric rotation;
Figure 12 is a side view of the shaft, including the coupling portion, shown in a configuration for eccentric rotation;
Figure 13 is an end view of part of the operating mechanism including an end view of the shaft with the coupling portion, the shaft being in a configuration for non-eccentric rotation;
Figure 14 is an end view of part of the operating mechanism including an end view of the shaft with the coupling portion, the shaft being in a first exemplary configuration for eccentric rotation;
Figure 15 is an end view of part of the operating mechanism including an end view of the shaft with the coupling portion, the shaft being in a second exemplary configuration for eccentric rotation;
Figure 16 is an enlarged end view of the shaft and coupling portion in the non-eccentric configuration of Figure 13;
Figure 17 is an enlarged end view of the shaft and coupling portion in the first exemplary eccentric configuration of Figure 14;
Figure 18 is an enlarged end view of the shaft and coupling portion in the first exemplary eccentric configuration of Figure 15;
Figure 19 is an end view of an alternative embodiment of the operating mechanism, including an end view of the shaft with the coupling portion, the shaft being in a configuration for non-eccentric rotation;
Figure 20 is an end view of the operating mechanism of Figure 19, including an end view of the shaft with the coupling portion, the shaft being in a first exemplary configuration for eccentric rotation; and
Figure 21 is an end view of the operating mechanism of Figure 19, including an end view of the shaft with the coupling portion, the shaft being in a second exemplary configuration for eccentric rotation.

### DETAILED DESCRIPTION OF THE DRAWINGS

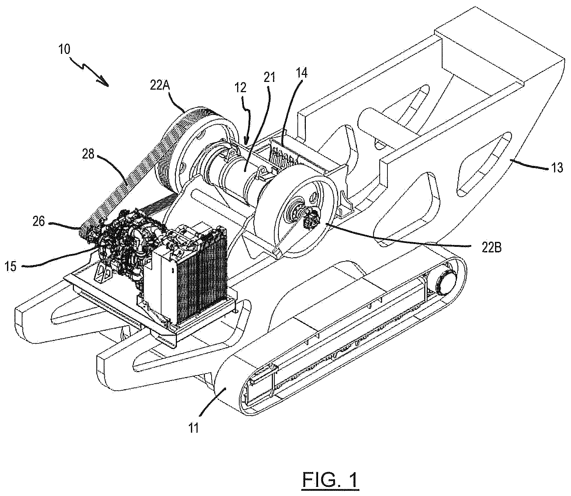

Referring now to Figure 1 the drawings, there is shown, generally indicated as 10, a material processing apparatus. Only those parts of the apparatus 10 that may be helpful for understanding the present invention are shown. In general, the apparatus 10 may be configured to perform any one or more of a plurality of processes, such as feeding, screening, separating, crushing, waste recycling or demolition and/or washing, on one or more types of aggregate or other material, for example rocks, stones, gravel, sand and/or soil, or any other material that is quarried, mined, excavated or recycled. To this end, the apparatus 10 includes one or more material processing device 12 configured to perform one or more of the foregoing processes. In typical embodiments of the invention, and as is illustrated, the material processing device 12 is a crusher, preferably a jaw crusher. It will be understood that the invention is not limited to crushers and may be employed with other types of material processing device, in particular those that are operable by an operating mechanism with a rotary shaft in which rotation of the shaft is translated into reciprocating or oscillatory movement of a movable part, e.g. a crushing jaw. The jaw crusher 12 is of a general type commonly used in material processing operations to crush rocks or other crushable material. Other examples of material processing devices suitable for use with the present invention include other types of crusher, e.g. cone crushers and gyratory crushers, shredders, vibratory screens, vibratory conveyors and vibratory feeders.

The apparatus 10 typically includes a chassis 13, or other base, on which the crusher 12, and/or other material processing device, is mounted. The apparatus 10 may be mobile, in which case one or more wheels and/or tracks 11 may be provided on the chassis 13. Alternatively, the apparatus 10 may be non-mobile or static (portable or non-portable) and may be provided on any suitable base or other support structure. The apparatus 10 typically includes other components (not shown) that cooperate directly or indirectly with the crusher 12, for example any one or more of conveyor(s), feeder(s), hopper(s) and/or screen(s), all of which may be mounted on the chassis 13 or other base/support structure.

The apparatus 10 includes one or more power sources for generating the requisite power (e.g. including electrical, hydraulic and/or pneumatic power as applicable) for the apparatus 10, including the crusher 12. The power source(s) may take any convenient conventional form, e.g. comprising any one or more of an engine, motor(s), hydraulic pump(s), compressor(s) and/or batteries. In Figure 1, a power source, or prime mover, in the form of an internal combustion engine (ICE) 15 is shown. In this example, the ICE 15 powers the crusher 12. In alternative embodiments (not illustrated) the crusher 12, or other material processing device, may be powered by one or more other power source, e.g. one or more electric or hydraulic motor, as well as or instead of the ICE 15. The apparatus 10 may be self-propelled and to the ICE 15 may be coupled to the tracks 11 in any conventional manner for this purpose. Alternatively, the tracks 11 may be driven by other means, e.g. one or more electric or hydraulic motors.

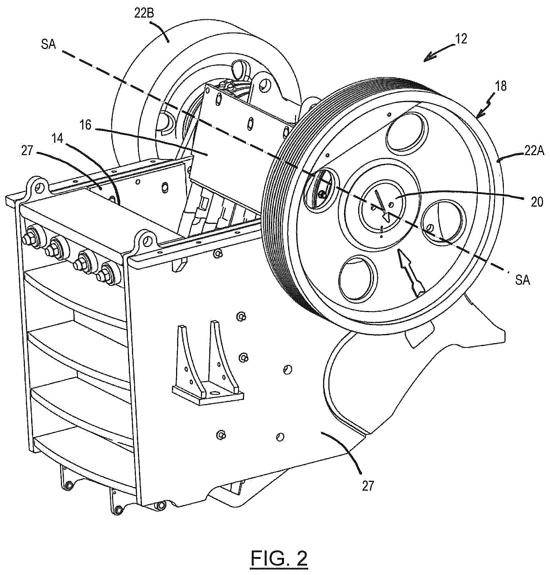

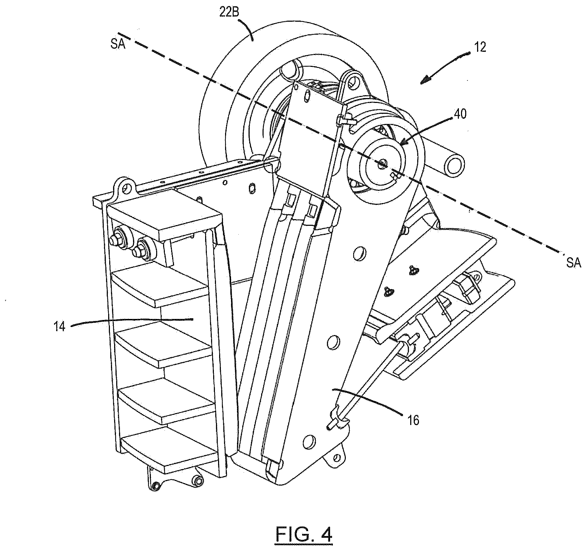

Figures 2 to 5 show a preferred embodiment of the jaw crusher 12. The jaw crusher 12 comprises first and second opposed crushing jaws 14, 16, at least one of which is movable with respect to the other to enable the jaws 14, 16 in order to crush material between the jaws 14, 16. In typical embodiments, the first jaw 14 is fixed and the second jaw 16 is movable towards and away from the first jaw 14 in an oscillatory manner.

An operating mechanism 18 is provided for moving the movable jaw 16. The operating mechanism 18 comprises a rotatable shaft 20 coupled to the movable jaw 16 (other a movable part of the relevant material processing device in other embodiments) in order to translate rotation of the shaft into oscillatory movement of the jaw 16. The shaft 20 is rotatable about a shaft axis SA. The shaft 20 is typically rotatably located in a shaft housing 21, which may take the form of a sleeve or other annular structure, typically having a circular or substantially circular transverse cross section. The shaft housing 21 may be part of the movable jaw 16, e.g. integrally formed with the upper end of the jaw 16, thereby providing the coupling between the shaft 20 and the jaw 16. The movable jaw 16 is typically also coupled to a toggle mechanism 23, which typically includes a toggle plate 22 and a tensioning rod and spring or ram assembly 24. One or more rotatable wheel 22A, 22B (typically one or more flywheel) may be coupled to the shaft 20, typically at one or both ends of the shaft 20. Each flywheel 22A, 22B is fixed or otherwise coupled to the shaft 20 for rotation with the shaft about the shaft axis SA. In use, rotation of the shaft 20 causes the upper end of the jaw 16 to oscillate, while the toggle mechanism 23 causes or facilitates oscillatory movement of the lower end of the jaw 16.

The shaft 20 may be described as an eccentric shaft, although as is described in more detail hereinafter, the shaft 20 is configurable to adjust its eccentricity, preferably being configurable to have no eccentricity when desired.

The operating mechanism 18 includes, or is coupled to, driving means, typically comprising one or more prime mover, e.g. motor(s) or engine(s), in particular with rotary output(s), for directly or indirectly rotating the shaft 20. The prime mover may be coupled to the operating mechanism 18 by any suitable means, e.g. any suitable drivetrain, as required. For example, in the embodiment of Figure 1, the ICE 15 is the prime mover and is coupled to the operating mechanism 18 by a drivetrain comprising a drive pulley 26 and driven pulley (in this case provided by the flywheel 22A) coupled by a drive belt 28, a clutch (not shown) and optionally a gearbox (not shown). Alternatively, or in addition, one or more motor (not illustrated) may be coupled to one or more end of the shaft 20 to drive the shaft 20 directly.

In some embodiments, the ICE 15 is a constant speed motor, i.e. has a drive shaft that rotates at a constant rotational speed during normal operation (i.e. after start up). A problem with such motors however is that engaging them with a load at a relatively high rotational speed is very hard wearing on the clutch. It is also typical to implement a direct drive system in which the drivetrain is driven by the ICE 15, via the clutch, with no gearbox and the ICE not being reversible, i.e. the ICE 15 drives the drivetrain in one direction only when the clutch is engaged. Such a drive system is desirable since, when running at normal operating speed, it is very fuel efficient. However, two problems with such a system are that it cannot undo blockages in the crusher because it does not have a reverse mode, and also that it does not operate efficiently whenever the engine is not operating at normal operating speed, e.g. during an initial start up period. In the event of a jam, the crusher must be emptied and the jammed material removed manually. The crusher must then be restarted while empty since the direct drive system is not suitable for starting under load conditions. As an alternative to the direct drive system, a hydrostatic drive system may be used that is capable of driving the pulley in either direction. This allows jams to be cleared automatically and without having to empty the crusher. However hydrostatic drives are relatively expensive and suffer from relatively poor fuel efficiency and power utilisation in comparison with the direct drive system.

The crusher 12 typically includes walls 27 beside the jaws 14, 16 to form, together with the jaws 14, 16, a crushing chamber. All of the crusher components may be provided on any suitable base (not shown). Typically, each jaw 14, 16 comprises a base 28, 30, which may be referred to as a jawstock, and a jaw liner 32, 34. Each jaw liner 32, 34 has a crushing surface 36, 38, the respective crushing surfaces 36, 38 opposing one another so that material can be crushed therebetween by relative movement of the jaws 14, 16. The jaw liners 32, 34 are removable from the respective jawstock 28, 30 to allow them to be replaced, for example in the event that it becomes overly worn through use.

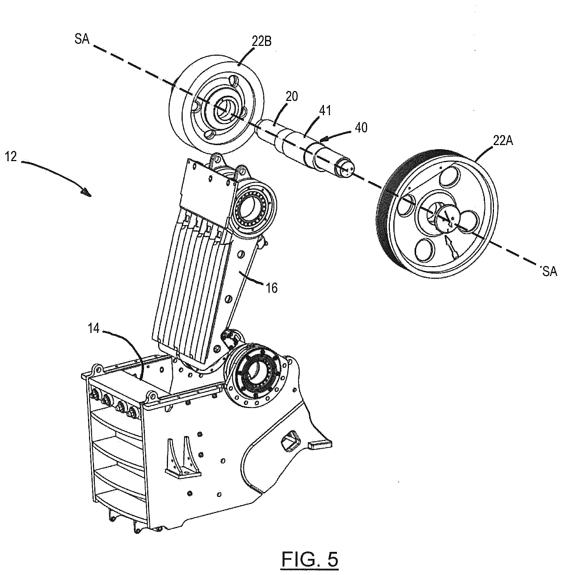

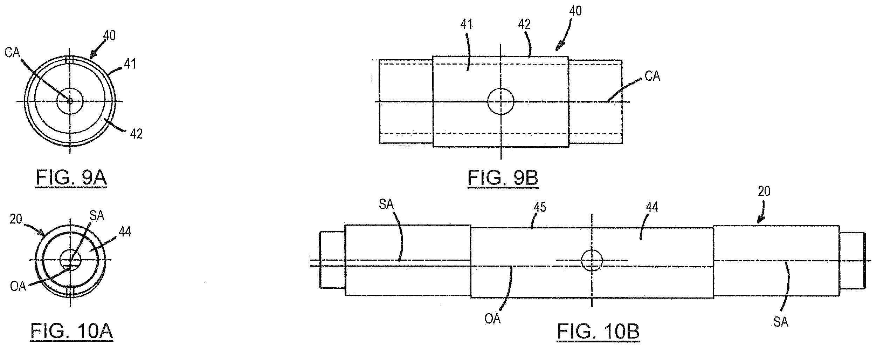

Referring in particular to Figures 5 to 21, the shaft 20 comprises a coupling portion 40 by which the shaft 20 is coupled to the movable jaw 16. The coupling portion 40 has a main axis hereinafter referred to as central axis CA and, in at least one configuration (which may be referred to as eccentric configuration(s)), the coupling portion 40 is configured such that the central axis CA is parallel with the shaft axis SA. As a result, the coupling portion 40 is eccentric with respect to the shaft axis SA. Accordingly, when the shaft 20 rotates, the coupling portion 40 rotates eccentrically with respect to the shaft axis SA. Eccentric rotation of the coupling portion 40 causes oscillatory movement of the jaw 16, i.e. the coupling portion 40 is configured such that rotation of the shaft 20 about the shaft axis SA causes the eccentrically-configured coupling portion 40 to impart corresponding oscillatory movement to the movable jaw 16.

The coupling portion 40 is configurable to adjust its eccentricity. In particular, the coupling portion 40 is configurable to adjust the location of the central axis CA with respect to the shaft axis SA in order to adjust the eccentricity of the coupling portion 40 with respect to the shaft axis SA. Typically adjusting the eccentricity of the coupling portion 40 involves configuring the coupling portion 40 to change the distance between the central axis CA and the shaft axis SA. Changing the distance between the central axis CA and the shaft axis SA has a corresponding effect on the movement imparted to the jaw 16. In particular, increasing the distance between the central axis CA and the shaft axis SA increases the eccentricity of the coupling portion 40 and correspondingly increases the magnitude, or stroke, of the oscillatory movement imparted to the jaw 16, whereas decreasing the distance between the central axis CA and the shaft axis SA decreases the eccentricity of the coupling portion 40 and correspondingly decreases the magnitude, or stroke, of the oscillatory movement imparted to the jaw 16. The distance between central axis CA and the shaft axis SA depends on the configuration of the coupling portion and may also depend on the application. For example, for a jaw crusher the distance between central axis CA and the shaft axis SA may for example be varied between 0-30mm. In preferred embodiments, the coupling portion is configurable to allow this distance, and therefore the eccentricity, to be increased and decreased progressively, in either a continuous or incremental manner.

In preferred embodiments, the coupling portion 40 is configurable such that rotation of the shaft about the shaft axis SA causes no movement, or substantially no movement, to be imparted to the movable jaw 16. To this end, the coupling portion 40 may be configured such that it is not eccentric or has zero, or substantially zero, eccentricity with respect to the shaft axis SA. This may be achieved by configuring the coupling portion 40 such that the central axis CA is coincident or substantially coincident with the shaft axis SA. In this non-eccentric configuration, the coupling portion 40 rotates concentrically, or substantially concentrically, with the shaft 20.

In preferred embodiments, in order to adjust the eccentricity of the shaft 20, and in particular the coupling portion 40 of the shaft 20, the coupling portion 40, or part of it, is rotatable about an offset axis OA that is parallel with the shaft axis SA. The offset axis OA is preferably in a fixed location with respect to the shaft axis 20. The configuration is such that the coupling portion 40, or the part of it that is rotatable about the offset axis OA, is eccentric with respect to the offset axis OA. In particular, at least an outer surface of the coupling portion 40, or of the part of it that is rotatable about the offset axis OA, is eccentric with respect to the offset axis OA. In some embodiments, rotation of the coupling portion 40, or of the part of it that is rotatable, in order to adjust the eccentricity of the shaft 20 may be performed manually, e.g. using any suitable manual operating mechanism (not shown), e.g. comprising a hand crank coupled to the coupling portion 40, or of the part of it that is rotatable. In preferred embodiments, a powered operating mechanism (not shown) is provided for rotating the coupling portion 40, or of the part of it that is rotatable, in order to adjust the eccentricity of the shaft 20. The powered operating mechanism may take any suitable form, typically comprising a powered prime mover (e.g. one or more electric or hydraulic motor) coupled to the coupling portion 40, or of the part of it that is rotatable, by any suitable drivetrain. Advantageously, the configuration is such rotation of the coupling portion 40, or of the part of it that is rotatable, in order to adjust the eccentricity of the shaft 20 may be performed during use of the crusher 12. A controller (not shown) may be provided for controlling operation of the powered operating mechanism, for example in response to input from a human operator and/or in response to one or more sensor signals (as described in more detail hereinafter). The controller may take any conventional form (e.g. comprising a suitably programmed computing device) and may be in communication with the powered operating mechanism by any conventional means, e.g. a wired or wireless connection.

In typical embodiments, the coupling portion 40 is coupled to the movable jaw 16 by the outer surface 41 of the coupling portion 40. The outer surface 41 is typically centred on the central axis CA. In preferred embodiments, the outer surface is annular, preferably being circular, or substantially circular, in transverse cross-section.

In preferred embodiments, the shaft housing 21 serves as a coupling structure whereby the coupling portion 40 of the shaft 20 is rotatably located in the housing 21. The configuration is such that in response to rotation of the shaft 20 about the shaft axis SA, the coupling portion 40 imparts oscillatory movement to the movable jaw 16 via the housing 21 when the coupling portion 40 is in an eccentric configuration. The shaft housing 21 and coupling portion 20, and in particular their inner and outer surfaces respectively, are shaped and dimensioned to facilitate the coupling. The inner surface of the housing 21 may be shaped and dimensioned to correspond with the outer surface 41 of the coupling portion 40, optionally such that the inner surface of the housing 21 and the outer surface 41 of the coupling portion 40 engage with each other while allowing relative rotation between the coupling portion 40 and the housing 21. Preferably one or more bearing 29 is provided between the coupling portion 40 and the housing 21 to facilitate rotation of the coupling portion 40 within the housing 21.

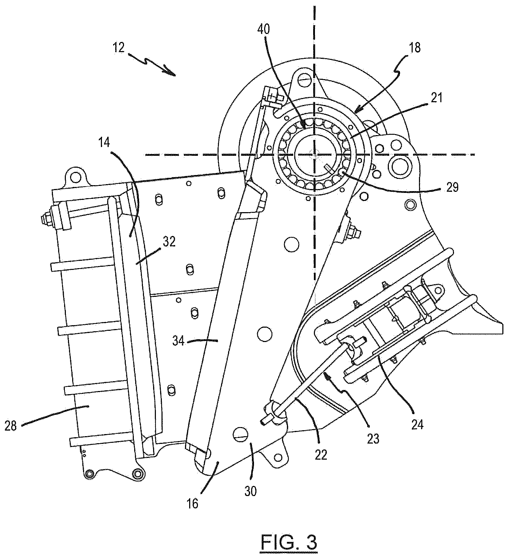

Figures 3 to 18 illustrate a preferred embodiment which is now described in more detail. The coupling portion 40 comprises an annular structure 42, preferably in the form of a sleeve, that is rotatable about the offset axis OA. The sleeve 42, or at least the outer surface 41 of the sleeve 42, is eccentric with respect to the offset axis OA. In particular, the sleeve 42, or at least the outer surface 41 of the sleeve 42, is rotatable eccentrically with respect to the offset axis OA. As is described in more detail below, the eccentricity of the sleeve 42 with respect to the offset axis OA and its ability to rotate with respect to the offset axis OA enables the eccentricity of the coupling portion 40 to be adjusted. The outer surface 41 is annular and is preferably circular, or substantially circular, in transverse cross-section. The sleeve 42 has an annular inner surface 43, the annular inner surface 43 preferably being circular, or substantially circular, in transverse cross-section. The inner surface 43 is centred on the offset axis OA and the outer surface 41 is centred on an axis (optionally the central axis CA) that is parallel with the offset axis OA and typically also parallel (i.e. not coincident) with the shaft axis SA.

The sleeve 42 is preferably an outer part of the coupling portion 40, and is preferably rotatable about the offset axis OA with respect to an inner part 44 of the coupling portion 40. Conveniently, the inner part 44 of the coupling portion 40 is an offset portion of the shaft 20 that is centred on the offset axis OA, and which is therefore offset from the adjacent parts(s) of the shaft 20 that are centred on the shaft axis SA. The sleeve 42 is located around the offset shaft portion 44 and is rotatable with respect to the offset shaft portion 44 about the offset axis OA. In preferred embodiments therefore, the inner part 44 is concentric with the offset axis OA but the outer part 42 is not concentric with the offset axis OA.

The offset shaft portion 44 has an annular outer surface 45 that is preferably being circular, or substantially circular, in transverse cross-section. The inner surface 43 of the sleeve 42 is correspondingly shaped and dimensioned preferably such that the inner surface 43 of the sleeve 42 and the outer surface 45 of the offset shaft portion 44 engage with each other, preferably having a close fit with each other, while allowing relative rotation between the sleeve 42 and the offset shaft portion 44 about the offset axis OA. Optionally one or more bearing may be provided between the sleeve 42 and the offset shaft portion 44 to facilitate their relative rotation.

In the embodiment of Figures 3 to 18, the coupling portion 40 is coupled to the jaw 16 via the sleeve 42. In particular the outer surface 41 of the sleeve 42 couples with the interior of the shaft housing 21, preferably via bearings 27.

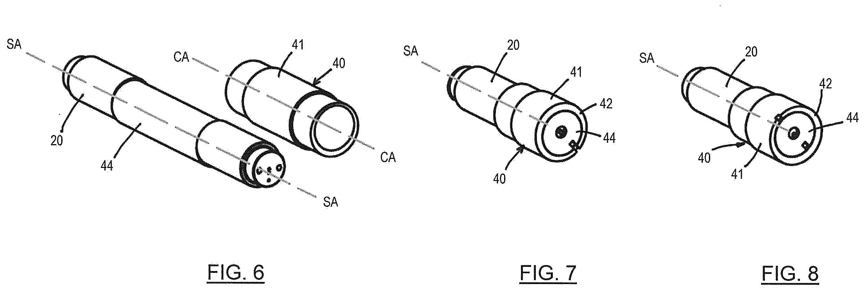

The configuration is such that rotation of the sleeve 42 about the offset axis OA (which also involves rotation of the sleeve 42 relative to the offset shaft portion 44 in this embodiment) moves the central axis CA of the coupling portion 40 with respect to the shaft axis SA. This has the effect of adjusting the eccentricity of the coupling portion 40, as is illustrated by way of example in Figures 7, 8 and 11 to 18.

Figures 7, 13 and 16 show the coupling portion 40 in a non-eccentric configuration, i.e. a configuration in which the central axis CA of the coupling portion 40 is coincident with the shaft axis SA. In this configuration, the coupling portion 40 rotates concentrically, i.e. not eccentrically, with the shaft 20. As a result, the shaft 20 does not act as an eccentric shaft and does not impart oscillating movement to the movable jaw 16.

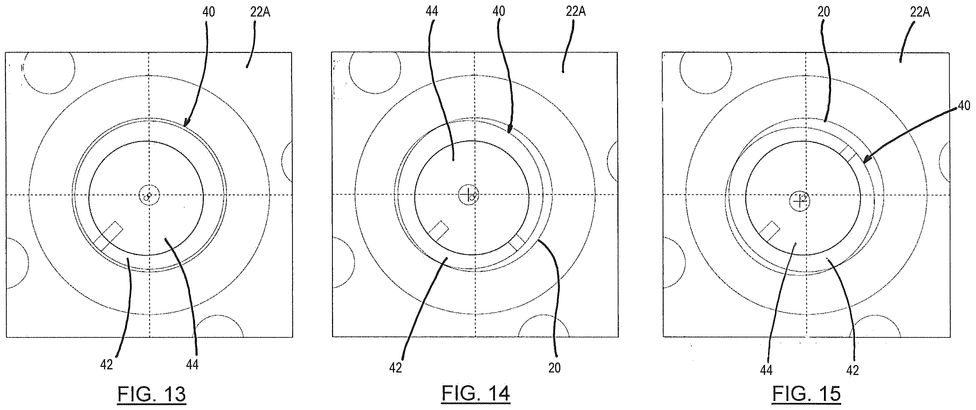

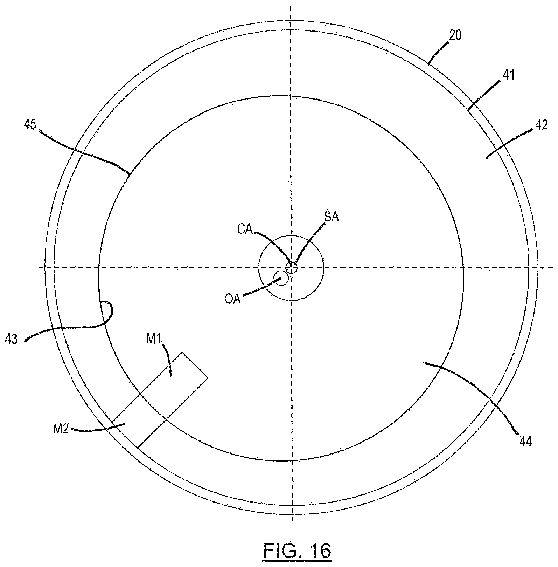

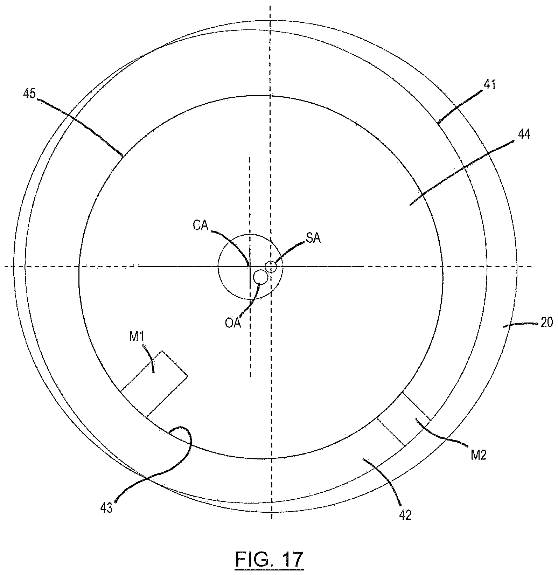

Figures 14 and 17 show the coupling portion 40 in a first eccentric configuration, i.e. a configuration in which the central axis CA of the coupling portion 40 is not coincident with the shaft axis SA; instead it is parallel with the shaft axis SA, or may be said to be eccentric with respect to the shaft axis SA. In this configuration, the coupling portion 40 rotates eccentrically with respect the shaft axis SA. As a result, the shaft 20 acts as an eccentric shaft and imparts oscillating movement to the movable jaw 16. As can be seen from a comparison of Figures 16 and 17 and in particular from a comparison of the position of markers M1, M2, in the first eccentric configuration (Figure 17) the sleeve 42 is rotated about the offset axis OA to a different angular position that it adopts in the non-eccentric configuration of Figure 16. This rotation, or angular movement, has the effect of moving the central axis CA from being coincident with the shaft axis SA (Figure 16) to a location (Figure 17) in which it is displaced from and parallel with the shaft axis SA. This movement of the central axis CA is a result of the eccentricity of the sleeve 42 with respect to the offset axis OA. The offset shaft portion 44 is fixed with respect to the offset axis OA and so the sleeve 42 rotates with respect to the offset shaft portion 44. In this example the sleeve 42 is rotated through 90° (anticlockwise as viewed in the drawings) between the configurations of Figures 16 and 17.

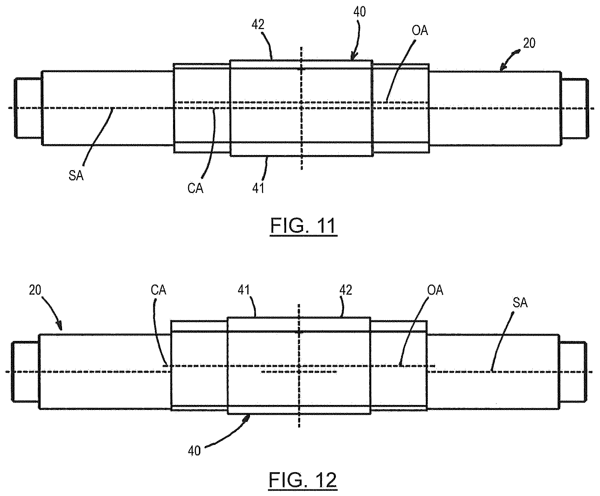

By way of example, from a comparison of Figures 11 and 12 it can be seen how rotation of the sleeve 42 affects the eccentricity of the coupling portion 40 with respect to the shaft axis SA. Figure 11 shows the coupling portion 40 in the non-eccentric configuration of Figure 16 in which the central axis CA is coincident with the shaft axis SA, the arrangement being such that the coupling portion 40 does not rotate eccentrically and does not impart oscillatory movement to the jaw 16, i.e. the shaft 20 does not act as an eccentric shaft. In contrast, in Figure 12, the coupling portion 40 in an eccentric configuration in which the central axis CA is parallel with the shaft axis SA, the arrangement being such that the coupling portion 40 rotates eccentrically and imparts oscillatory movement to the jaw 16, i.e. the shaft 20 acts as an eccentric shaft.

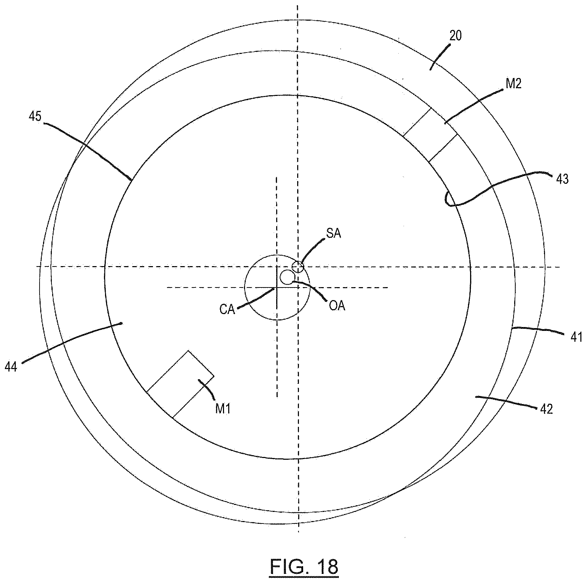

Figures 15 and 18 show the coupling portion 40 in a second eccentric configuration. As can be seen from a comparison of Figures 17 and 18 and in particular from a comparison of the position of markers M1, M2, in the second eccentric configuration (Figure 18) the sleeve 42 is rotated about the offset axis OA to a different angular position that it adopts in the first eccentric configuration of Figure 17 and the non-eccentric configuration of Figure 16. The different angular position has the effect of moving the central axis CA a different location in which it is displaced from and parallel with the shaft axis SA. Accordingly, the eccentricity of the coupling portion 40 is different in the second eccentric configuration when compared to the first eccentric configuration. In this example the sleeve 42 is rotated through 90° (anticlockwise as viewed in the drawings) between the configurations of Figures 17 and 18, i.e. 180° from the non-eccentric configuration of Figure 16.

The sleeve angular positions of the first and second eccentric configurations of Figures 17 and 18 are provided by way of example. More generally, the sleeve 42 may adopt any one of at least two different angular positions, each angular position resulting in a respective different eccentricity of the coupling portion 40, and therefore respective different characteristic(s), in particular magnitude, of the movement imparted to the jaw 16 as the shaft 20 rotates. In preferred embodiments, the angular positions include an angular position that results a non-eccentric configuration (for example as shown in Figure 16) such that no movement, or substantially no movement, is imparted to the jaw 16 as the shaft 20 rotates. The magnitude (and/or other characteristic(s) as applicable) of the movement that is imparted to the jaw 16 can therefore be adjusted by adjusting the angular position of the sleeve 42, i.e. by rotating the sleeve 42 about the offset axis OA (preferably using a powered operating mechanism as described above). The magnitude (and/or other characteristic(s) as applicable) of the movement imparted to the jaw 16 is also determined by the eccentricity of the sleeve 42 with respect to the offset axis OA, which may depend on the shape and dimensions of the sleeve 42.

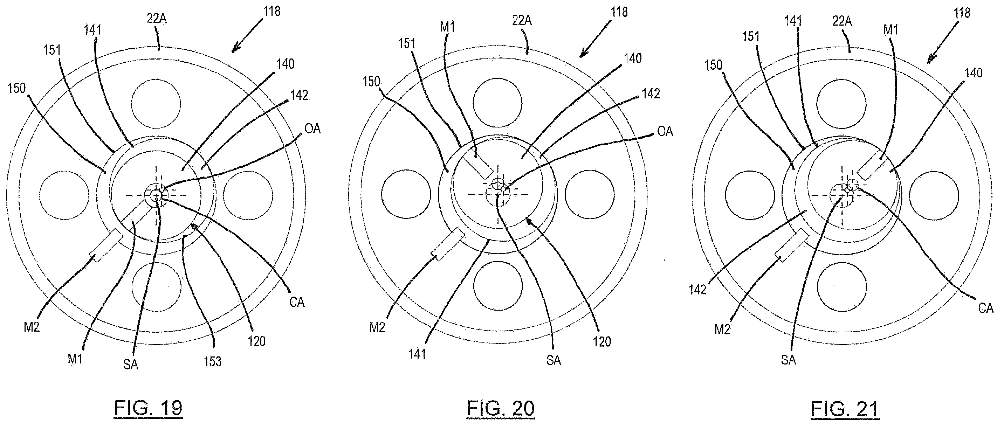

Figures 19 to 21 illustrate an alternative embodiment of the operating mechanism 118, like numerals and terminology being used to denote like parts and the same or similar description applying as provided in relation to the embodiment of Figures 3 to 18 as would be apparent to a skilled person. In this embodiment, instead of an outer sleeve rotating with respect to an inner part, the entire coupling portion 140 is rotatable about offset axis OA. The shaft 120 includes an eccentric portion 142 that is fixed with respect to the coupling portion 140. The eccentric portion 142 need not be part of the coupling portion 140, for example it may be displaced from the coupling portion 140 in a direction along the shaft axis SA. Nevertheless, the eccentric portion 142 and coupling portion 140 are fixed or otherwise coupled to each other such that the configuration of the coupling portion 140, in particular the location of its central axis CA, can be adjusted by using the eccentric portion 142 as described in more detail below.

The eccentric portion 142, or at least an outer surface 141 of the eccentric portion 142, is eccentric with respect to the coupling portion 140. The eccentric portion 142 is rotatably located within an annular structure 150, preferably in the form of a sleeve or collar. The sleeve 150, or at least an inner surface 153 of the sleeve 150 is eccentric with respect to the coupling portion 140. The eccentric portion 142, or at least its outer surface 141, is centred on the offset axis OA that is parallel with, and preferably in a fixed location with respect to, the shaft axis SA. The sleeve 150, or at least its inner surface 153, is centred on the offset axis OA. The coupling portion 140 and the eccentric portion 142 are rotatable, preferably together rather than independently, with respect to the sleeve 150 about the offset axis OA.

The inner surface 153 of sleeve 150 is annular, preferably being circular, or substantially circular, in transverse cross-section. The sleeve 150 has an annular outer surface 151 that is preferably circular, or substantially circular, in transverse cross-section. The eccentric portion 142 and the sleeve 150 are correspondingly shaped and dimensioned, preferably such the inner surface 153 of the sleeve 150 and the outer surface 141 the eccentric portion 142 engage with each other (and preferably having a close fit with each other), while allowing relative rotation between the sleeve150 and eccentric portion 143 about the offset axis OA. The inner surface 153 is typically centred on said offset axis and said outer surface is centred on an axis parallel with said offset axis. The outer surface 151 of the sleeve 150 is preferably centred on the shaft axis SA. Conveniently, the sleeve 150, for example at the outer surface 151, is fixed to the flywheel 22A.

The coupling portion 140 is typically coupled to the movable jaw 16 (or other movable part as applicable) via the outer surface of said coupling portion 140. Typically the coupling portion 140 is rotatably located in the shaft housing 21 as described above in relation to the previous embodiment. In particular the outer surface of the coupling portion 140 couples with the interior of the shaft housing 21, preferably via bearings 27.

The configuration, in particular the respective eccentricity of the sleeve 150 and the eccentric portion 142, is such that, relative rotation of the sleeve 150 and the eccentric portion 142 moves the central axis CA of the coupling portion 140 with respect to the shaft axis SA. This has the effect of adjusting the eccentricity of the coupling portion 140, as is illustrated by way of example in Figures 19 to 21.

Figure 19 shows the coupling portion 140 in a non-eccentric configuration, i.e. a configuration in which the central axis CA of the coupling portion 140 is coincident with the shaft axis SA. In this configuration, the coupling portion 140 rotates concentrically, i.e. not eccentrically, with the shaft 20. As a result, the shaft 20 does not act as an eccentric shaft and does not impart oscillating movement to the movable jaw 16.

Figure 20 shows the coupling portion 140 in a first eccentric configuration, i.e. a configuration in which the central axis CA of the coupling portion 140 is not coincident with the shaft axis SA; instead it is parallel with the shaft axis SA, or may be said to be eccentric with respect to the shaft axis SA. In this configuration, the coupling portion 140 rotates eccentrically with respect the shaft axis SA. As a result, the shaft 20 acts as an eccentric shaft and imparts oscillating movement to the movable jaw 16. As can be seen from a comparison of Figures 19 and 20 and in particular from a comparison of the position of markers M1, M2, in the first eccentric configuration (Figure 20) the eccentric portion 142 is rotated about the offset axis OA to a different angular position that it adopts in the non-eccentric configuration of Figure 19. This rotation, or angular movement, has the effect of moving the central axis CA from being coincident with the shaft axis SA (Figure 19) to a location (Figure 20) in which it is displaced from and parallel with the shaft axis SA. This movement of the central axis CA is a result of the respective eccentricity of the sleeve 150 and eccentric portion 142 with respect to the offset axis OA. In this embodiment, the coupling portion 140 is fixed with respect to the eccentric portion 142 and so rotates with the eccentric portion 142. In this example the eccentric portion 142 is rotated through 90° (clockwise as viewed in the drawings) between the configurations of Figures 19 and 20.

Figure 21 shows the coupling portion 140 in a second eccentric configuration. As can be seen from a comparison of Figures 20 and 21 and in particular from a comparison of the position of markers M1, M2, in the second eccentric configuration (Figure 21) the eccentric portion 142 is rotated about the offset axis OA to a different angular position that it adopts in the first eccentric configuration of Figure 20 and the non-eccentric configuration of Figure 19. The different angular position has the effect of moving the central axis CA a different location in which it is displaced from and parallel with the shaft axis SA. Accordingly, the eccentricity of the coupling portion 140 is different in the second eccentric configuration when compared to the first eccentric configuration. In this example the eccentric portion 142 is rotated through 90° (clockwise as viewed in the drawings) between the configurations of Figures 20 and 21, i.e. 180° from the non-eccentric configuration of Figure 19.

The eccentric portion angular positions of the first and second eccentric configurations of Figures 20 and 21 are provided by way of example. More generally, the sleeve 150 and eccentric portion 142 may adopt any one of at least two different relative angular positions, each relative angular position resulting in a respective different eccentricity of the coupling portion 140, and therefore respective different characteristic(s), in particular magnitude, of the movement imparted to the jaw 16 as the shaft 20 rotates. In preferred embodiments, the angular positions include an angular position that results a non-eccentric configuration (for example as shown in Figure 19) such that no movement, or substantially no movement, is imparted to the jaw 16 as the shaft 20 rotates. The magnitude (and/or other characteristic(s) as applicable) of the movement that is imparted to the jaw 16 can therefore be adjusted by adjusting the relative angular position of the sleeve 150 and eccentric portion 142, e.g. by rotating the sleeve 150 and/or the eccentric portion 142 about the offset axis OA (preferably using a powered operating mechanism as described above). The magnitude (and/or other characteristic(s) as applicable) of the movement imparted to the jaw 16 is also determined by the eccentricity of the sleeve 150 and/or the eccentric portion 142 with respect to the offset axis OA, which may depend on the shape and dimensions of the sleeve 150 and/or the eccentric portion 142.

It will be apparent from the foregoing that the eccentricity of the coupling portion 40, 140 is adjustable in order to adjust one or more characteristics (in particular the magnitude or stroke) of the movement that is imparted by the shaft 20 to the movable jaw 16. Advantageously, such adjustment can be performed while the crusher 12, or other material processing device as applicable, is operating, i.e. on the fly. In preferred embodiments, the coupling portion 40, 140 is configurable to allow the imparted movement to be increased and decreased progressively, in either a continuous or incremental manner. Being able to adjust the movement of the jaw 16 (or other movable part of the material processing device as applicable) is advantageous in that it allows the operation of the crusher 12 to be adjusted to suit operating conditions and changes in operating conditions. For example, the magnitude or stroke of the movement may be increased or decreased to suit the size or type of material being crushed, or to help to clear a blockage. For example, in order to clear a blockage, the coupling portion 40, 140 can be configured to initially implement no movement of the jaw, or relatively small movement of the jaw, and then reconfigured as required to increase the movement, optionally in increments over time.

It is particularly advantageous to be able to operate the crusher 12 (or other material processing device as applicable) in one more mode in which the jaw 16 (or other movable part as applicable) does not move while the shaft 20 rotates since this reduces the load on the prime mover and/or drivetrain that drives the operating mechanism 18, 118, which can for example be beneficial during start up (e.g. when the ICE 15 is running up to its operating speed) or run down (e.g. when the ICE 15 is running down from its operating speed to a stopped state). Preferred embodiments allow the crusher 12 (or other material processing device as applicable) to be started when blocked. For example an unblocking mode may be implemented in which, during an initial period, the coupling portion 40, 140 is in a non-eccentric configuration such that no movement, or substantially no movement, is imparted to the jaw 16, and in which subsequently the coupling portion 40, 140 is reconfigured to adopt at least one eccentric configuration, preferably a series of eccentric configurations such that the magnitude or stroke of the jaw movement increases over time in order to clear the blockage.

More generally, a preferred mode of operation involves configuring the coupling portion 40, 140 such that, initially (e.g. at start-up), the shaft 20 exhibits no, or substantially no, eccentricity, and subsequently reconfiguring the coupling portion 40, 140 to increase the eccentricity to a desired operating level, preferably progressively, in either a continuous or incremental manner. Another preferred mode of operation involves reconfiguring the coupling portion 40, 140 to decrease the eccentricity from an operating level to a level at which the shaft 20 exhibits no, or substantially no, eccentricity, preferably progressively, in either a continuous or incremental manner.

One or more sensors, e.g. load sensors (not shown), may be provided and the operating mechanism 18, 118 (in particular the powered operating mechanism for adjusting the eccentricity of the shaft) may be controlled depending on the output of the sensor(s). In particular the configuration of the coupling portion 40, 140 may be controlled to adjust the eccentricity of the shaft 20 depending on the sensed load. This for example allows the operation of the crusher 12 to be adjusted, advantageously during use of the crusher 12, to provide optimal crushing characteristics. For example if an increase in load is detected (e.g. as a result of harder material entering the crushing chamber or packing or blocking of the crushing chamber occurs), the coupling portion 40, 140 may be reconfigured to reduce the magnitude of the jaw movement. This can help to conserve the momentum of the flywheels 22A, 22B. The load sensor(s) may be of any conventional type (e.g. strain gauge or load cell) and may be provided in any suitable location(s), e.g. in or on the crushing chamber to sense the load, or incorporated into the drivetrain or driving system for the crusher. For example the sensor(s) may comprise hydraulic or electrical power sensor(s).

It will be apparent that the ability to adjust the operation of the operating mechanism as described above can provide any one or more of the following advantages: reduction in wear; reduction in energy consumption; reduction in power requirements; and increased efficiency.

The invention is not limited to the embodiment(s) described herein but can be amended or modified without departing from the scope of the present invention.

## Claims

1. A material processing device comprising an operating mechanism for operating said material processing device, the operating mechanism comprising a shaft rotatable about a shaft axis, the shaft being coupled to a movable part of said material processing device in order to translate rotation of said shaft into oscillatory movement of said movable part, wherein the shaft comprises a coupling portion by which said shaft is coupled to said movable part, said coupling portion having a central axis, and wherein, in at least one configuration, said central axis is parallel with said shaft axis and said coupling portion is eccentric with respect to said shaft axis, and wherein said coupling portion is configurable to adjust the location of said central axis with respect to said shaft axis in order to adjust the eccentricity of said coupling portion with respect to said shaft axis.

2. The material processing device of claim 1, wherein, in said at least one configuration, in response to rotation of said shaft about said shaft axis, said coupling portion rotates eccentrically about said shaft axis, or rotates eccentrically with respect to the shaft axis; and/or wherein in at least one other configuration, said central axis is coincident or substantially coincident with said shaft axis, and wherein, preferably, in said at least one other configuration, in response to rotation of said shaft about said shaft axis, said coupling portion rotates concentrically, or substantially concentrically, with said shaft; and/or wherein in said at least one other configuration said coupling portion is configured such that rotation of said shaft about said shaft axis causes said coupling portion to impart no movement, or substantially no movement, to said movable part.

3. The material processing device of any preceding claim, wherein at least part of said coupling portion is rotatable about an offset axis that is parallel with, and preferably in a fixed location with respect to, said shaft axis, said at least part of said coupling portion, or at least an outer surface thereof, being eccentric with respect to said offset axis, and wherein, preferably, the entire coupling portion is rotatable about said offset axis.

4. The material processing device of any preceding claim, wherein said coupling portion is coupled to said movable part by an outer surface of said coupling portion, said outer surface typically being centred on said central axis.

5. The material processing device of any preceding claim wherein said coupling portion has an annular outer surface, said annular outer surface preferably being circular, or substantially circular, in transverse cross-section.

6. The material processing device of any preceding claim, wherein said coupling portion comprises an annular structure, preferably in the form of a sleeve, rotatable about an offset axis that is parallel with, and preferably in a fixed location with respect to, said shaft axis, said annular structure, or at least an outer surface of said annular structure, being eccentric with respect to said offset axis, and wherein said annular structure is preferably an outer part of said coupling portion, and is preferably rotatable about said offset axis with respect to an inner part of said coupling portion, and wherein, preferably, said inner part of said coupling portion comprises an offset shaft portion centred on said offset axis, said annular structure being located around said offset shaft portion and rotatable with respect to said offset shaft portion about said offset axis, said offset shaft portion preferably being part of said shaft, and wherein said annular structure may have an annular outer surface, said annular outer surface preferably being circular, or substantially circular, in transverse cross-section, and/or wherein said offset shaft portion may have an annular outer surface, said annular outer surface preferably being circular, or substantially circular, in transverse cross-section, and said annular structure has a corresponding annular inner surface, said annular inner surface preferably being circular, or substantially circular, in transverse cross-section, and wherein, preferably, said offset shaft portion and annular structure are correspondingly shaped and dimensioned preferably such that said inner surface of said annular structure and said outer surface of said offset shaft portion engage with each other, preferably having a close fit with each other, while allowing relative rotation between said annular structure and said offset shaft portion about said offset axis.

7. The material processing device of claim 6, wherein said annular structure has an annular outer surface, said annular outer surface preferably being circular, or substantially circular, in transverse cross-section, and an annular inner surface, said annular inner surface preferably being circular, or substantially circular, in transverse cross-section, wherein said inner surface is centred on said offset axis and said outer surface is centred on an axis parallel with said offset axis, and wherein said outer surface of said annular structure is preferably centred on said central axis; and/or wherein said coupling portion is coupled to said movable part by an outer surface of said annular structure; and/or wherein rotation of said annular structure about said offset axis moves said central axis with respect to said shaft axis.

8. The material processing device of any one of claims 1 to 7, wherein said shaft includes an eccentric portion that is fixed with respect to said coupling portion, said eccentric portion, or at least an outer surface of said eccentric portion, being eccentric with respect to said coupling portion, and wherein said eccentric portion rotatably located within an annular structure, preferably in the form of a sleeve or collar, the annular structure, or at least an inner surface of the annular structure, being eccentric with respect to said coupling portion, and wherein said annular structure typically has an annular outer surface, said annular outer surface preferably being circular, or substantially circular, in transverse cross-section, and wherein, preferably, said eccentric portion, or at least an outer surface of said eccentric portion, is centred on an offset axis that is parallel with, and preferably in a fixed location with respect to, said shaft axis, and wherein said annular structure, or at least an inner surface of said annular structure, is centred on said offset axis, said coupling portion and said eccentric portion being rotatable with respect to said annular structure about said offset axis.

9. The material processing device as claimed in claim 8, wherein said eccentric portion has an annular outer surface, said annular outer surface preferably being circular, or substantially circular, in transverse cross-section, and said annular structure has a corresponding annular inner surface, said annular inner surface preferably being circular, or substantially circular, in transverse cross-section, and wherein, preferably, said eccentric portion and said annular structure are correspondingly shaped and dimensioned, preferably such that said inner surface of said annular structure and said outer surface of said eccentric portion engage with each other, and preferably having a close fit with each other, while allowing relative rotation between said annular structure and said eccentric portion about said offset axis.

10. The material processing device as claimed in claim 8 or 9, wherein said annular structure has an annular outer surface, said annular outer surface preferably being circular, or substantially circular, in transverse cross-section, and an annular inner surface, said annular inner surface preferably being circular, or substantially circular, in transverse cross-section, wherein said inner surface is centred on said offset axis and said outer surface is centred on an axis parallel with said offset axis, and wherein said outer surface of said annular structure is preferably centred on said shaft axis.

11. The material processing device as claimed in any one of claims 8 to 10, wherein said coupling portion is coupled to said movable part by an outer surface of said coupling portion; and/or wherein relative rotation of said annular structure and said eccentric portion moves said central axis with respect to said shaft axis; and/or wherein said eccentric portion is not part of said coupling portion, typically being displaced from said coupling portion in a direction along said shaft axis; and/or wherein a flywheel is coupled to said shaft for rotation with said shaft about said shaft axis, and wherein said annular structure, in particular an outer portion of said annular structure, is fixed to said flywheel.

12. The material processing device of any preceding claim, wherein in said at least one configuration said coupling portion is configured such that rotation of said shaft about said shaft axis causes said coupling portion to impart corresponding oscillatory movement to said movable part.

13. The material processing device of any preceding claim, wherein said movable part includes a coupling structure, preferably in the form of a sleeve or other annular structure, the coupling structure being located around at least said coupling portion of said shaft and being coupled to the coupling portion to allow rotation of said coupling portion with respect to said coupling structure and to cause said coupling portion to impart oscillatory movement to said movable part upon rotation of said shaft about said shaft axis when in said at least one configuration, and wherein, optionally, one or more bearing is provided between the coupling portion and the coupling structure to facilitate rotation of said coupling portion within said coupling structure.

14. The material processing device of any preceding claim wherein said material processing device is a crusher, preferably a jaw crusher, and said movable part is a crushing part of said crusher, preferably a movable jaw of said jaw crusher.

15. A method of operating a material processing device as claimed in any one of claims 1 to 14, said method including operating said material processing device in at least one operating mode in which said coupling portion is configured such that rotation of said shaft about said shaft axis causes said coupling portion to impart corresponding oscillatory movement to said movable part, and adjusting said oscillatory movement, for example a stroke or magnitude of said oscillatory movement, by configuring said coupling portion to adjust the location of said central axis with respect to said shaft axis in order to adjust the eccentricity of said coupling portion with respect to said shaft axis, and wherein, preferably, the method includes operating said material processing device in at least one other operating mode in which said coupling portion is configured such that rotation of said shaft about said shaft axis causes said coupling portion to impart no movement, or substantially no movement, to said movable part, and wherein, preferably, said at least one other operating mode includes a start-up mode, the method including operating said material processing device in said start-up mode for an initial period, preferably until said operating mechanism reaches a desired operating speed, and subsequently operating said material processing device in said at least one operating mode, and wherein, optionally, said at least one other operating mode includes a run-down mode, the method including operating said material processing device in said at least one operating mode, and subsequently operating said material processing device in said run-down mode for a run-down period, preferably until said operating mechanism is stopped; and/or wherein, optionally, the method includes operating said material processing device in a blockage clearance mode in which the configuration of the coupling portion is adjusted to increase the stroke or magnitude of the oscillatory movement, preferably in multiple increments, and wherein, preferably, the method includes, during an initial period, configuring said coupling portion such that rotation of said shaft about said shaft axis causes said coupling portion to impart no movement, or substantially no movement, to said movable part, and subsequently adjusting the configuration of the coupling portion to increase the stroke or magnitude of the oscillatory movement.
